# EUROPÄISCHE PATENTSCHRIFT

(11) **EP 2 781 323 B1**
(45) Veröffentlichungstag und Bekanntmachung des Hinweises auf die Patenterteilung: **13.07.2016**
(21) Anmeldenummer: 14160544.4
(22) Anmeldetag: 18.03.2014
(51) Int. Cl.: B29B 13/06, F26B 11/14, B29B 9/16

(54) **Vorrichtung zum Trocknen von kleinstückigem Material**
Device for drying of small sized materials
Dispositif de séchage de matériau en petits morceaux

(30) Priorität: 18.03.2013 DE 102013004511
(43) Veröffentlichungstag der Anmeldung: 24.09.2014
(73) Patentinhaber: Kleinen, Karl-Heinz, 47906 Kempen (DE); Buzga, Heinrich, 41516 Grevenbroich (DE)
(72) Erfinder: Kleinen, Karl-Heinz, 47906 Kempen (DE); Buzga, Heinrich, 41516 Grevenbroich (DE)
(74) Vertreter: Dammertz, Ulrich

(56) Entgegenhaltungen:
- EP-A2- 0 696 715
- DE-A1-102010 034 119
- DE-B- 1 262 173
- DE-C2- 3 120 792
- DE-C2- 19 647 025
- JP-A- 2008 014 580
- US-A- 6 079 118
- US-A- 6 126 100
- US-A1- 2007 265 429
- US-A1- 2012 067 438

## Beschreibung

Die vorliegende Erfindung betrifft eine Vorrichtung zum Trocknen einer Vielzahl von unterschiedlichen Kunststoffteilen, insbesondere kleinstückigem Material, wie zerkleinerte Kunststoffabfälle.

Aus dem Stand der Technik sind Verfahren und Vorrichtungen zum Entwässern und/oder zum Trocknen von unterschiedlichen Kunststoffteilen, insbesondere von Recyclingmaterial, bekannt, beispielsweise aus der DE 196 47 025 C2, deren Offenbarungen hiermit explizit referenziert werden. Üblicherweise umfassen derartige Vorrichtungen einen als Trommel ausgebildeten Behandlungsraum, wobei die Kunststoffteile rotierend und axial von einer Einlassseite bis zu einer Auslassseite der Trommel bewegt werden. Die Rotation der Kunststoffteile wird durch rotierende Einsätze, wie etwa mit Schaufeln versehenen Rotoren hervorgerufen. Dabei kann der Rotor zylindrisch glatt oder zylindrisch stufenförmig ausgebildet sein. An der inneren Wandung der Trommel kann eine Siebtrommel angeordnet sein. Die DE 31 20 792 C2 offenbart beispielsweise einen sogenannten Granulattrockner zum Entwässern kleiner Teilchen, vorzugsweise Kunststoffgranulat, wobei der Rotor sich konisch oder stufenförmig erweitert und der Siebkörper bzw. die Siebtrommel stufenförmig als Siebkorb ausgebildet ist. Dementsprechend kann die Siebtrommel Abschnitte mit unterschiedlichen Durchmessern aufweisen. Die zu trocknenden Kunststoffteile gelangen in den Wirkungsbereich der rotierenden Schaufeln des Rotors und werden durch die Zentrifugalkraft gegen die Siebtrommel geschleudert. Vorteilhafterweise kann dies wiederholt erfolgen, so dass in der Folge durch das Schleudern der Kunststoffteile gegen die Siebtrommel eine Entfeuchtung und damit eine Trocknung der Kunststoffteile erfolgt.

Nachteilig bei derartigen Vorrichtungen zum Trocknen von Kunststoffteilen ist, dass je in Abhängigkeit der Gleiteigenschaften der Kunststoffteile, der Masse der Kunststoffteile und/oder in Abhängigkeit von dem Material der Kunststoffteile die Verweilzeit der Kunststoffteile in der Trommel nicht vorherbestimmt werden kann. Ferner kann es vorkommen, dass einzelne Kunststoffteile nicht bis zu der Auslassseite bewegt werden können, sondern etwa an der Innenwandung der Trommel anhaften können. Die Trommel der Vorrichtung kann hierdurch insbesondere im Wiederholungsfall verstopfen, so dass die Trocknung von Kunststoffteilen innerhalb der Vorrichtung nicht mehr bzw. nicht mehr so effektiv möglich ist.

Um ein derartiges Verstopfen zu verhindern, sind aus dem Stand der Technik Vorrichtungen bekannt, die zusätzlich mit einem Absaugventilator ausgerüstet sind. Jedoch wirkt sich die Verwendung eines Absaugventilators nachteilig auf die Trocknung der Kunststoffteile aus. Die Trocknung der Kunststoffteile wird minimiert, da durch den Ventilator der feuchte, gesättigte Luftstrom aus dem durch die Trommel ausgebildeten Behandlungsraum zu schnell entzogen wird. Mit derartigen Vorrichtungen getrocknete Folienschnipsel als Kunststoffteile weisen nach der Trocknung eine relative Restfeuchte von mindestens 15 % auf.

Bei den aus dem Stand der Technik bekannten Vorrichtungen ist die Schaufelstellung eines Rotors innerhalb der Trommel fest vorgegeben. Die Schaufelstellung kann die Verweilzeit von zu trocknenden Kunststoffteilen innerhalb der Trommel beeinflussen, da die Kunststoffteile in Abhängigkeit der Schaufelstellung durch die Trommel hindurch befördert werden. Nachteilig hierbei ist, dass auch durch kurzzeitiges Rückwärtslaufen des Rotors eine Verlängerung der Verweilzeit der Kunststoffteile nicht durchführbar ist, da die Rotationsgeschwindigkeit der Kunststoffteile in der Regel etwa 40 m/s bis etwa 60 m/s beträgt. Dies entspricht beispielsweise einer Drehzahl einer Schaufel des Rotors - auch Schnecke genannt - von etwa 2.900 U/min, bei einem Durchmesser der Schnecke von etwa 400 mm. Der Winkel der Schaufelstellung des Rotors beträgt im Allgemeinen etwa 15° bis etwa 45°. Nachteilig ist, dass es bedingt durch das schlechte Gleitverhalten und dem geringen Masseanteil bei kleinstückigem Material, wie beispielsweise dünnen Folien oder Fasern ebenso zu Verstopfungen in der Trommel der Vorrichtung zum Trocknen kommen kann.

Nachteilig ist ferner insbesondere bei kleinstückigen Kunststoffteilen mit geringem Masseanteil und schlechtem Gleitverhalten, wie dies bei dünnen Folien und Fasern gegeben ist, dass der Transport durch die Trommel hindurch mittels der Schaufeln des sich drehenden Rotors nur teilweise erfolgt, da die Kunststoffteile nur unzureichend in den resultierenden und rotierenden Produktstrom gelangen können. In der Folge kann dies ebenso zu Verstopfungen der Trommel führen. Zudem ist der zur Verfügung stehende Bauraum für die Schaufeln des Rotors aufgrund der zugrundeliegenden Schneckengeometrie begrenzt, so dass ein stabiles Förderverhalten von der Einlassseite zu der Auslassseite nicht gewährleistet werden kann.

DE 10 2010 034 119 A1 zeigt eine Vorrichtung zur Trocknung von Granulatkörnern, mit einem Gehäuse und einem Rotor mit Rotorschaufeln, welcher drehbar antreibbar in dem Gehäuse angeordnet ist. Diese Vorrichtung umfasst weiter einen Entwässerungsbereich mit zumindest einem Entwässerungssieb, dessen Sieböffnungen kleiner sind als die zu trocknenden Granulatkörner, so dass Prozessfluid mittels Durchtritt von einer Siebvorderseite zu einer Siebrückseite von den Granulatkörnern abgetrennt werden kann. Es ist ein Zusatzlüfter vorgesehen, der so angeordnet ist, dass ein Zusatzluftstrom davon in Richtung einer Hauptbewegungsrichtung der Granulatkörner durch das Gehäuse aufgeprägt ist.

Aus EP 0 696 715 A2 sind eine Trocknungsvorrichtung und ein entsprechendes Trocknungsverfahren bekannt, wobei zu trocknendes Material unter dem Einfluss einer Zentrifugalkraft gegen eine Wärmeübergangsfläche eines Trockenbehälters gedrängt wird. Die Trocknungsvorrichtung umfasst einen zylindrischen Trockenbehälter zur Aufnahme von zu trocknendem Material, wobei die Innenwandfläche des Behälters eine Wärmeübergangsfläche bildet, und Wärmeerzeugungsmittel, die den zylindrischen Trockenbehälter umgeben, um die Wärmeübergangsfläche zu erwärmen. Des Weiteren umfasst die Vorrichtung eine Drehflügelbaugruppe, die in dem Behälter drehbar angebracht ist, um das Material darin aufwärts zu drängen.

US 2012/0067438 zeigt eine gattungsgemäße Vorrichtung mit den Merkmalen nach dem Oberbegriff von Anspruch 1. Bei dieser Vorrichtung wird ein aus Polymeren bestehendes Granulat in eine drehbare Trommel gegeben, welche an ihrer Innenwandung genau eine durchgängige Leitschaufel aufweist. Entlang ihrer Rotationsachse weist die Trommel ferner einen Heizstrahler auf. Die Trommel ist drehbar auf Rollen gelagert, und weist eine Einlassöffnung zur Befüllung mit einem Granulat sowie eine Auslassöffnung zur Entnahme des Granulats für die weitere Bearbeitung mittels eines Formgebungssystems auf. Der Erfindung liegt in Anbetracht des Standes der Technik die Aufgabe zugrunde, die Nachteile der aus dem Stand der Technik bekannten Vorrichtungen zu vermeiden und insbesondere die Verweilzeit der zu trocknenden Kunststoffteile innerhalb der Trommel unter Berücksichtigung der Materialeigenschaften der zu trocknenden Kunststoffteile und/oder unter Berücksichtigung eines stabilen Förderverhaltens insbesondere variabel oder fest zu gestalten.

Zur technischen Lösung dieser Aufgabe wird mit der Erfindung eine Vorrichtung zum Trocknen kleinstückigem Material, insbesondere einer Vielzahl von unterschiedlichen Kunststoffteilen, insbesondere kleinstückige Materialen, wie zerkleinerte Kunststoffabfälle, vorgeschlagen umfassend
eine Trommel mit einer Einlassöffnung zum Einlassen von feuchten Kunststoffteilen in die Trommel und einer Auslassöffnung zum Auslassen von entfeuchteten Kunststoffteilen aus der Trommel,
Mittel zum Transport der Kunststoffteile, wobei die Kunststoffteile von der Einlassöffnung durch die Trommel hindurch zu der Auslassöffnung transportierbar sind, und
Mittel zum Entfeuchten der Kunststoffteile, wobei die Kunststoffteile innerhalb der Trommel entfeuchtbar sind, vorzugsweise mit einer Luftstömung,
welche dadurch gekennzeichnet ist, dass
an der Innenwandung der Trommel mehrere Leitbleche im Wesentlichen übereinander angeordnet sind, welche gegenüber der Innenwandung der Trommel einen Anstellwinkel aufweisen und jeweils abschnittsweise an der Innenwandung der Trommel einen Strömungs- bzw. Leitkanal für die Kunststoffteile ausbilden, so dass die Kunststoffteile von den Mitteln zum Transport der Kunststoffteile entlang des von dem wenigstens einen Leitblech ausgebildeten Strömungs- bzw. Leitkanals durch die Trommel hindurch transportiert werden.

Der Erfindung liegt die Erkenntnis zugrunde, dass insbesondere das Verstopfen bedingt durch sich festsetzende Kunststoffteile vermeidbar ist, wenn an der Innenwandung der Trommel mehrere Leitbleche angeordnet sind, welche gegenüber der Innenwandung der Trommel einen Anstellwinkel aufweist bzw. einnehmen kann und jeweils abschnittsweise an der Innenwandung der Trommel einen Strömungskanal und/oder einen Leitkanal für die Kunststoffteile ausbilden. Demgemäß werden die Kunststoffteile bei dem Transport und der Trocknung der Kunststoffteile durch die Trommel hindurch entlang des mittels der Leitbleche ausgebildeten Strömungs- bzw. Leitkanals sicher und definiert von der Einlassöffnung zu der Auslassöffnung der Trommel transportiert. Es hat sich gezeigt, dass insbesondere ein Festsetzen bzw. ein Verstopfen der Vorrichtung nahezu vollständig vermeidbar ist.

Eine weitere Erkenntnis der Erfindung ist, dass die relative Restfeuchte der zu trocknenden Kunststoffteile wesentlich reduziert wird. Insbesondere bei Versuchen mit Folienschnipseln hat sich gezeigt, dass die bei aus dem Stand der Technik bekannten Vorrichtungen gegebene relative Restfeuchte von etwa 15 % bei Verwendung der erfindungsgemäßen Vorrichtung auf nur noch etwa 5 % reduzierbar ist.

Zudem bedingt die Ausbildung des von den Leitblechem ausgebildeten Strömungs- bzw. Leitkanals ein stabiles Förderverhalten der zu trocknenden Kunststoffteile, da diese entlang des von den Leitblechen ausgebildeten Strömungs- bzw. Leitkanals sicher von der Einlassöffnung zu der Auslassöffnung der Trommel transportiert werden. Ein Verweilen von einzelnen Kunststoffteilen innerhalb der Trommel ist durch die gerichtete Wirkung des durch das wenigstens eine Leitblechausgebildeten Strömungs- bzw. Leitkanals nahezu unmöglich.

Eine Ausgestaltung der Erfindung ist dadurch gekennzeichnet, dass ein Leitblech wenigstens ein Viertel des Umfangs der Innenwandung der Trommel, bevorzugt etwa die Hälfte des Umfangs der Innenwandung der Trommel umfasst. Somit kann eine ausreichend lange Führung entlang des von den Leitblechen ausgebildeten Strömungs- bzw. Leitkanals für ein Kunststoffteil in Richtung der Auslassöffnung der Trommel gewährleistet werden. Eine weitere Ausgestaltung der Erfindung sieht vor, dass sich ein Leitblech aus mehreren Teilblechen zusammensetzt bzw. zusammengesetzt wird.

Eine weitere Ausgestaltung der Erfindung ist gekennzeichnet durch Mittel zur Einstellung des Anstellwinkels eines Leitblechs, mittels derer die Neigung der Leitbleche gegenüber der Innenwandung der Trommel verstellbar und insbesondere eine Steigung eines Leitblechs gegenüber der Innenwandung der Trommel einstellbar ist. Über den Anstellwinkel ist die Verweilzeit der Kunststoffteile in der Trommel einstellbar. Bei einem Anstellwinkel von 0° erfolgt quasi kein Transport von Folienschnipseln als Kunststoffteilen von der Einlassöffnung durch die Trommel hindurch zu der Auslassöffnung bzw. nur ein geringfügiger Transport bedingt durch die Gleiteigenschaften des Materials. Bei dickwandigen und/oder schweren Kunststoffteilen erfolgt ein Transport des Produktstroms durch die Vorrichtung aufgrund von Ausdünnungs-, Verdrängungs-und/oder Pralleffekten. Es hat sich gezeigt, dass die Einstellung des Anstellwinkels einen Einfluss auf die relative Restfeuchte der Kunststoffteile hat. Je steiler der Anstellwinkel ist, desto kürzer ist die Verweilzeit der Kunststoffteile innerhalb der Trommel der Vorrichtung.

Eine Ausgestaltung der Erfindung ist dadurch gekennzeichnet, dass die Mittel zur Einstellung des Anstellwinkels eines Leitblechs arretierbar sind, so dass der Neigungswinkel eines Leitblechs fest einstellbar ist. Der Anstellwinkel ist demzufolge in einer Position fixierbar. Vorteilhafterweise kann so eine Anpassung der Vorrichtung an die zu trocknenden unterschiedlichen Kunststoffteile, insbesondere deren Größe und/oder Material erfolgen. Einmal eingestellt ist es in der Regel nicht mehr erforderlich, eine Anpassung des Anstellwinkels vorzunehmen.

Ferner sind die Leitbleche vorteilhafterweise in gleichmäßigen Abständen an der Innenwandung der Trommel angeordnet und erstrecken sich derart vorzugsweise über die gesamte Länge der Trommel.

Eine besonders bevorzugte Ausgestaltung der Erfindung sieht vor, dass die von den Leitblechen ausgebildeten Strömungs- bzw. Leitkanäle im Wesentlichen überlappend ausgebildet sind, so dass die Kunststoffteile von den Mitteln zum Transport von einem Strömungskanal in einen benachbarten Strömungskanal transportiert werden. Der Endpunkt eines jeweiligen Leitblechs ist daher vorteilhafterweise mindestens auf derselben Höhe angeordnet, wie der Anfang des nächsten und benachbarten Leitblechs, wobei insbesondere eine Überlappung, vorzugsweise in der halben Seite eines durch ein Leitblech ausgebildeten Strömungs- bzw. Leitkanals vorhanden ist.

Eine weitere Ausgestaltung der Erfindung sieht vor, dass jeweils die Neigung der Leitbleche über die Mittel zur Einstellung des Anstellwinkels eines Leitblechs simultan einstellbar ist. Der Anstellwinkel eines jeden Leitblechs ist variabel und kann für jedes Leitblech einzeln oder im gesamten Verbund mechanisch, elektrisch oder durch eine computergesteuerte elektronische Steuerung geregelt werden. Vorteilhafterweise sieht eine Ausgestaltung der Erfindung vor, dass die Mittel zur Einstellung des Anstellwinkels eines Leitblechs manuell und/oder maschinell einstellbar sind.

In einer vorteilhaften Ausgestaltung ist von der Innenwandung der Trommel beabstandet eine Siebtrommel angeordnet, wobei zwischen der Trommel und der Siebtrommel ein Sammelraum für Abscheidungen, insbesondere Wasser ausgebildet ist. An diesem Sammelraum für Abscheidungen kann vorteilhafterweise ein Auslass für Trocknungsluft angeschlossen sein, so dass die in dem Sammelraum gesammelten Abscheidungen durch die Trocknungsluft aus der Vorrichtung heraus beförderbar sind. Die von der Innenwandung der Trommel beabstandete Siebtrommel kann im Sinne der Erfindung als Mittel zum Entfeuchten der Kunststoffteile angesehen werden.

Eine besonders bevorzugte Ausgestaltung der Erfindung ist dadurch gekennzeichnet, dass ein mit wenigstens einer Schaufel versehener Rotor in der Trommel angeordnet ist, mittels welchem die Kunststoffteile zur Entfeuchtung und/oder zum Transport von der Einlassöffnung zu der Auslassöffnung der Trommel in der Trommel umwälzbar sind. Die Drehachse des Rotors ist dabei vorteilhafterweise im Wesentlichen zentriert innerhalb der Trommel angeordnet.

Zum Trocknen von Kunststoffteilen mittels des mit wenigstens einer Schaufel versehenen Rotors und einer unperforierten Trommel, daher einer Trommel ohne eine von der Innenwandung beabstandete Siebtrommel, wird Heißgas im Gegenstrom über die zu trocknenden Kunststoffteile geführt. Die Kombination der axialen Bewegung außerhalb des Rotationsbereiches des Rotors mit der Heißgasgegenströmung in der den Behandlungsraum ausbildenden Trommel der Vorrichtung bewirkt für jedes Kunststoffteil eine optimale, wirtschaftliche und energiearme Gegenstrom-Trocknung. Vorteilhafterweise werden durch erzeugten Rotationsgeschwindigkeit des Rotors die Kunststoffteile mittels Fliehkräften in die von den Leitblechen ausgebildeten Strömungs- bzw. Leitkanäle geschleudert und über den zwangläufigen Kontakt mit den Leitbleichen axial aus ihrer Rotationsbahn geleitet. Nach dem Verlassen der von den Leitblechen ausgebildeten Strömungs- bzw. Leitkanal werden die Kunststoffteile wieder von dem mit wenigstens einer Schaufel versehenen Rotor erfasst. Die Kunststoffteile werden nach jeweils einer Umdrehung dem nächsten durch wenigstens ein Leitblech ausgebildeten Strömungs- bzw. Leitkanal zugeführt.
Eine Ausgestaltung der Erfindung sieht vor, dass der Anstellwinkel wenigstens eines Leitblechs zwischen 0° und 45°, bevorzugt zwischen 0,5° und 30°, und besonders bevorzugt zwischen 1° und 20° beträgt.

Eine weitere Ausgestaltung der Erfindung ist dadurch gekennzeichnet, dass die Umfangsgeschwindigkeit des Rotors zwischen 20 m/s und 160 m/s, bevorzugt zwischen 20 m/s und 120 m/s, besonders bevorzugt zwischen 20 m/s und 100 m/s beträgt.

Weitere Einzelheiten, Merkmale und Vorteile der Erfindung werden nachfolgend anhand des in den Figuren dargestellten Ausführungsbeispiels näher erläutert. Dabei zeigen:
- Fig. 1: eine perspektivische Schnittdarstellung einer Ausgestaltung einer erfindungsgemäßen Vorrichtung,
- Fig. 2: eine Schnittdarstellung der Ausgestaltung einer erfindungsgemäßen Vorrichtung,
- Fig. 3a: eine teilgeschnittene Ansicht der Ausgestaltung nach Fig. 2,
- Fig. 3b: eine perspektivische Darstellung der Fig. 3a;
- Fig. 4: eine Darstellung eines erfindungsgemäßen Leitblechs,
- Fig. 5: eine perspektivische Schnittdarstellung gemäß der Schnittlinie A-A nach Fig. 1 eines Leitblechs nach Fig. 4 mit einem Teilbereich eines Rotors, und
- Fig. 6: eine Schnittdarstellung einer Trommel der Ausgestaltung nach Fig. 1.

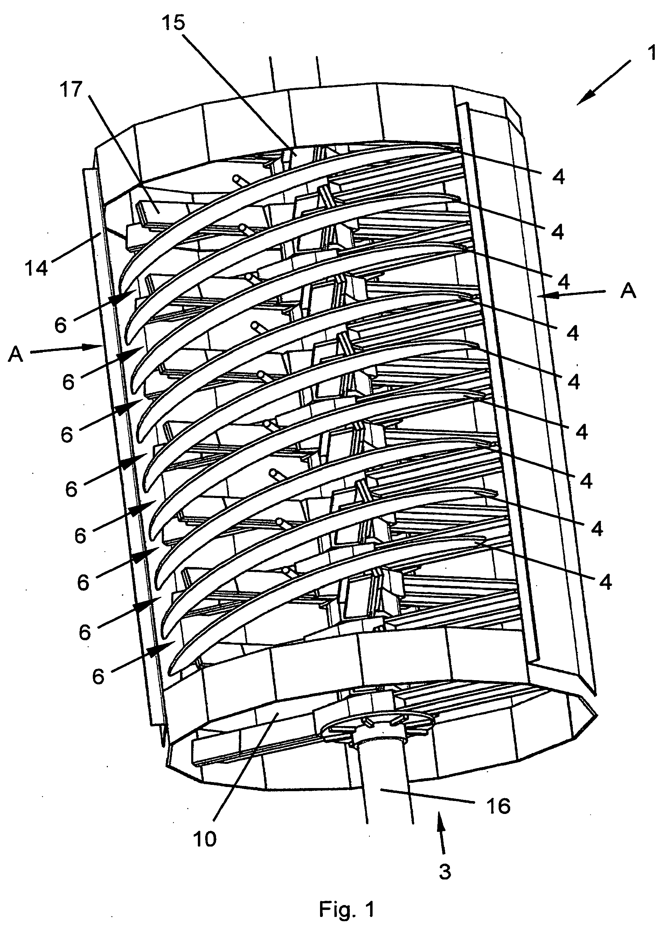

Fig. 1 zeigt eine Trocknungsvorrichtung 1 in einer perspektivischen Schnittdarstellung. Die Trocknungsvorrichtung 1 umfasst eine Trommel 14 in der ein Rotor 16 mit Schaufeln 17 angeordnet ist, wobei dessen Drehachse im wesentlichen zentriert innerhalb der Trommel 14 angeordnet ist. An der Innenwandung der Trommel 14 sind Leitbleche 4 angeordnet, welche abschnittsweise - vorliegend etwa die Hälfte des Umfangs der Innenwandung der Trommel 14 - jeweils einen Strömungs- bzw. Leitkanal 6 ausbilden. Durch die Trommel 14 bzw. durch deren Behandlungsraum 10 strömt ein Luftstrom, insbesondere ein Warmluftstrom 3. Ferner kann - hier nicht dargestellt - mit einem Heißgas-Gegenstrom eine sogenannte Gegenstromtrocknung realisiert werden.

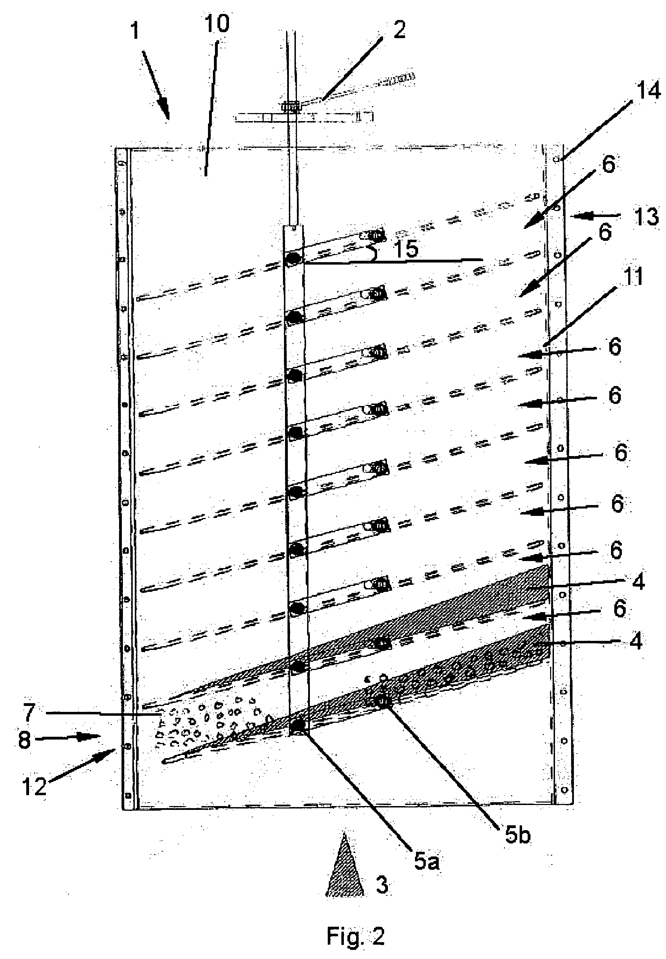

Fig. 2 zeigt eine Ausgestaltung einer erfindungsgemäßen Trocknungsvorrichtung 1 mit einer Trommel 14 mit einer Einlassöffnung 12 zum Einlassen von feuchten Kunststoffteilen 7 in die Trommel 14 und einer Auslassöffnung 13 zum Auslassen von entfeuchteten Kunststoffteilen 7 aus der Trommel 14. An der Innenwandung der Trommel 14 sind Leitbleche 4 angeordnet. Von der Innenwandung der Trommel 1 beabstandet ist eine Siebtrommel 11 angeordnet, wobei zwischen der Trommel 14 und der Siebtrommel 11 ein Sammelraum für Abscheidungen, insbesondere Wasser ausgebildet ist.

Die Trocknungsvorrichtung 1 weist Mittel 2 zur Einstellung des Anstellwinkels der Leitbleche 4 auf, wobei der eingestellte Anstellwinkel eines Leitbleches zur Darstellung in Fig. 2 durch den Winkel mit dem Bezugszeichen 15 dargestellt ist. In den Behandlungsraum 10 der Trommel 14 Trocknungsvorrichtung 1 strömt ein Luftstrom, in dem sich die Kunststoffteile 7 bewegen und welcher durch den angedeuteten Pfeil mit dem Bezugszeichen 8 dargestellt ist. Im unteren Bereich der Trocknungseinheit 1 befindet sich eine Öffnung durch die ein Luftstrom, insbesondere ein Warmluftstrom 3 eingebracht wird. Oberhalb dieser Öffnung wird das feuchte Kleinstückgut (Kunststoffteile 7) vertikal mit dem weiteren feuchteren Luftstrom 8 in den Behandlungsraum 10 eingetragen. Diese Kunststoffteile 7 werden auf die Leibleche 4 geleitet.

Durch die variablen Drehachsen 5a, 5b erfolgt die Einstellung des Anstellwinkels 15 der Leitbleche 4. Je nach Einstellung des Anstellwinkels 15 erfolgt eine Verweilzeitveränderung des kleinstückigen Gutes (Kunststoffteile 7) innerhalb der Trommelvorrichtung 1, welche die Dauer angibt, die ein Kunststoffteil 7 benötigt, um von der Einlassöffnung 12 zu der Auslassöffnung 13 durch den Behandlungsraum 10 der Trommel 14 hindurch zu gelangen. Durch die Steigung des Leitbleches 4 von einem Winkel von 0° bis 90° kann die Verweilzeit der Kunststoffteile 7 innerhalb der Trocknungseinheit 1 demzufolge verlängert oder verkürzt werden, insbesondere in Anhängigkeit von den Materialeigenschaften des zu trocknenden kleinstückigen Guts (Kunststoffteile 7). Die Einstellung des Anstellwinkels 15 über die Mittel 2zur Einstellung des Anstellwinkels 15 kann auch während des Betriebes der Trocknungsvorrichtung 1 erfolgen. Die Trocknungsvorrichtung 1 muss hierzu nicht heruntergefahren oder angehalten werden.

In Fig. 2 sind die Mittel zur Einstellung des Anstellwinkels 2, außerhalb der Trocknungsvorrichtung 1 angeordnet. Über die erste und zweite Drehachse 5a, 5b erfolgt jeweils die Einstellung des Anstellwinkels 15 (nicht dargestellt) eines jeden Leitblechs 4.

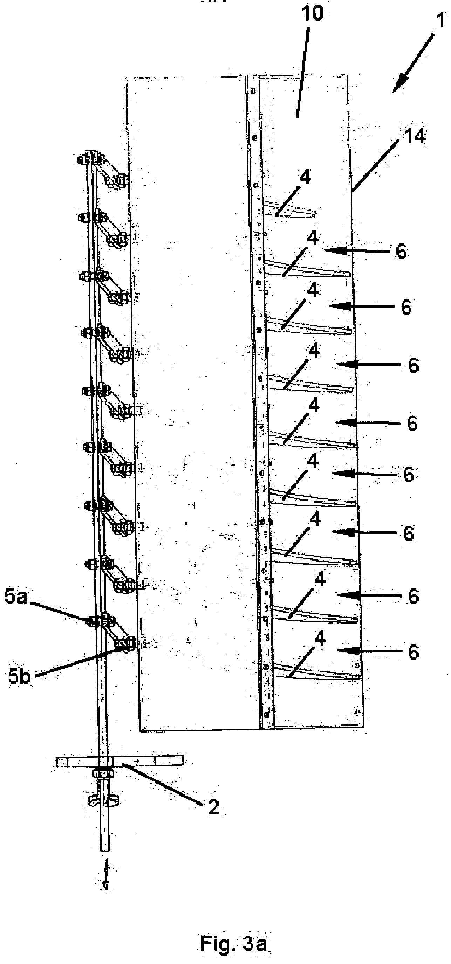

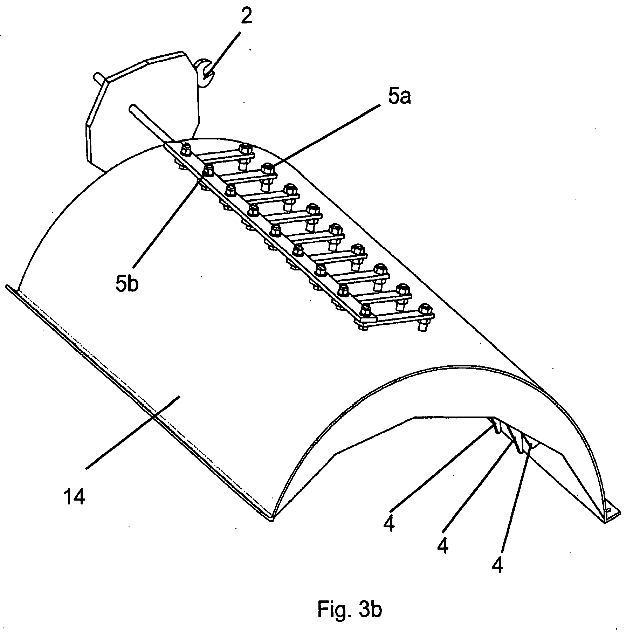

Fig. 3a ist in einer teilweisen Schnittdarstellung dargestellt, so dass innerhalb der Trocknungsvorrichtung 1 der Behandlungsraum 10 erkennbar ist. Die Leitbleche 4 sind dargestellt, wobei die Leitbleche 4 jeweils wenigstens abschnittsweise an der Innenwandung der Trommel 14 einen Strömungs- bzw. Leitkanal 6 für die Kunststoffteile 7 ausbilden. Fig. 3b zeigt eine perspektivische Ansicht nach Fig. 3a.

Ferner verdeutlichen Fig. 3a und Fig. 3b, dass über die Mittel 2 zur Einstellung des Anstellwinkels 15 simultan jeweils die Neigung der Leitbleche 4 gleichzeitig einstellbar ist, so dass sich der Anstellwinkel 15 eines jeden Leitblechs 4 entsprechend einstellen lässt. In einer alternativen, hier nicht dargestellten Ausgestaltung der Erfindung sind die Leitbleche 4 jeweils separat hinsichtlich ihres Anstellwinkels einstellbar.

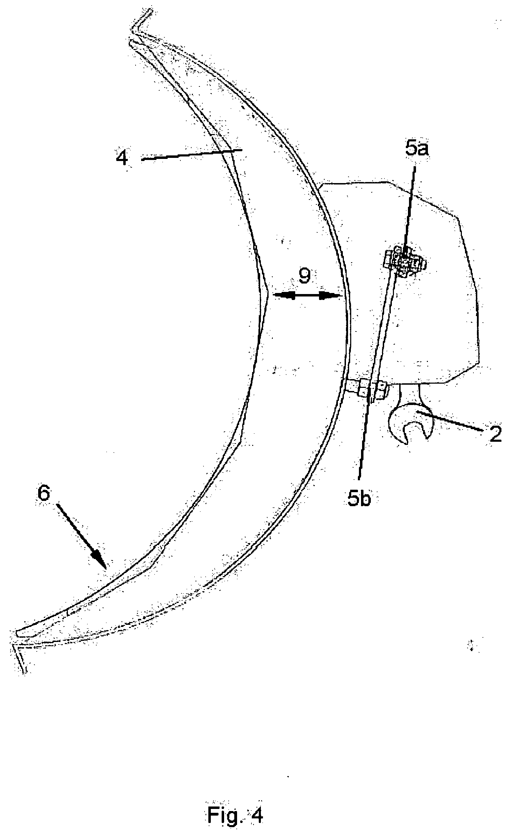

Fig. 4 zeigt ein Leitblech 4 mit dem dazu gehörigen Mittel 2 zur Einstellung des Anstellwinkels 15. Die Einstellung des Anstellwinkels 15 des Leitblechs 4 erfolgt über eine erste und zweite Drehachse 5a, 5b, so dass die Rotation des Mittels 2 zur Einstellung des Anstellwinkels 15 eine Veränderung der Neigung des Leitblechs 4 bewirkt. Durch den Pfeil mit dem Bezugszeichen 6 ist der von dem Leitblech 4 ausgebildete Strömungs- bzw. Leitkanal 6 angedeutet. Der Strömungs- bzw. Leitkanal 6 weist eine definierte Kanaltiefe 9 auf, welcher seine größte Tiefe im Wesentlichen in der Mitte der Halbfläche aufweist.

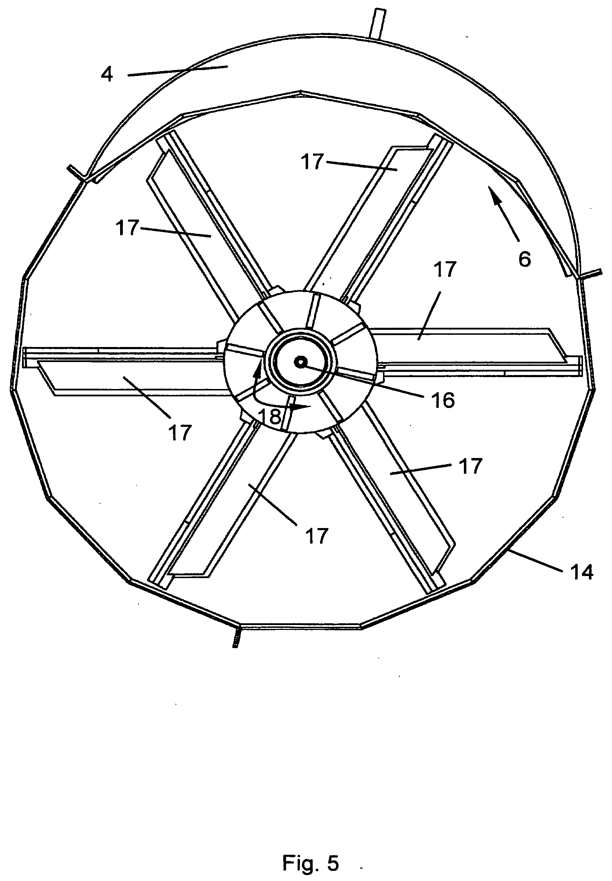

Fig. 5 zeigt einen horizontalen Schnitt gemäß der Schnittlinie A-A nach Fig. 1. Ein Rotor 16 mit sechs Schaufeln 17 befindet sich zentriert innerhalb der Trommel 14 der Trocknungsvorrichtung 1. An einer Seite der Innenwandung der Trommel 14 ist ein Leitblech 4 angeordnet (in Fig. 5 links dargestellt), welches abschnittsweise über etwa die Hälfte des Umfangs der Innenwandung der Trommel 14 einen Strömungs- bzw. Leitkanal 6 für Kunststoffteile 7 ausbildet. Eine Drehung des Rotors 16 ist vorliegend symbolisch durch den Doppelpfeil mit dem Bezugszeichen 18 dargestellt. Die Schaufeln 17 des Rotors 16 weisen eine Neigung auf, wodurch bei Rotationen des Rotors 16 in Richtung des angedeuteten Doppelpfeils 18 Kunststoffteile 7 wiederholt durch die Zentrifugalkraft gegen die Innenwandung der Trommel 14 geschleudert werden. Die Neigung bewirkt zudem, dass die durch den Rotor 16 umgewälzten Kunststoffteile 7 eine Beschleunigung in axialer Richtung der Trommel 14, also von der Einlassöffnung 12 zu der Auslassöffnung 13 der Trommel 14 hin, erfahren.

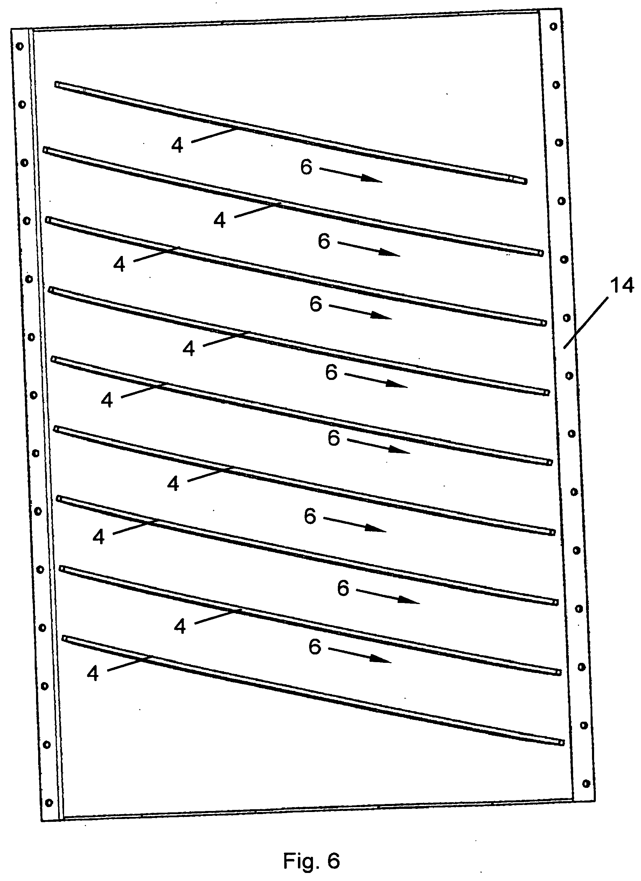

Fig. 6 zeigt eine Schnittdarstellung der Trommel 14. An der Innenwandung der Trommel 14 sind mehrere Leitbleche 4 dargestellt, welche jeweils abschnittsweise an der Innenwandung der Trommel 14 einen Strömungs- bzw. Leitkanal 6 für die Kunststoffteile 7 ausbilden.

Die von den Leitblechen 4 ausgebildeten Strömungs- bzw. Leitkanäle 6 sind im Wesentlichen überlappend ausgebildet, so dass die Kunststoffteile 7 von den Mitteln zum Transport von einem Strömungs- bzw. Leitkanal 6 in einen benachbarten Strömungs- bzw. Leitkanal 6 transportiert bzw. bewegt werden können. Der Endpunkt eines jeweiligen Leitblechs 4 ist in etwa auf der Höhe des Anfangspunkts eines benachbarten Leitblechs angeordnet. Hierdurch erfolgt eine Überlappung der Strömungs- bzw. Leitkanäle 6, so dass der Transport von Kunststoffteilen 7 von der Einlassöffnung 12 zu der Auslassöffnung 13 der Trommel 14 durch die Trommel hindurch sichergestellt ist. Ein dauerhaftes Verweilen von Kunststoffteilen 7 innerhalb des Behandlungsraums 10 der Trommel 14, insbesondere ein Verstopfen der Trocknungsvorrichtung 1 kann mit der erfindungsgemäßen Lösung einer Vorrichtung zum Trocknen einer Vielzahl von unterschiedlichen Kunststoffteilen wirksam vermieden werden.

Es ergibt sich der Vorteil, dass die Trocknungsrate bei Verwendung der erfindungsgemäßen Vorrichtung minimiert wird. Konkret verringert sich bei eingesetztem kleinstückigem Gut, wie Kunststoffteilen 7, insbesondere kleinstückigem Material, wie zerkleinerte Kunststoffabfälle, die im Rahmen des Recycling von Kunststoffprodukten anfallen, die relative Restfeuchte von durchschnittlich etwa 15 % bis etwa 25 %, um weitere 7 % bis etwa 16 %, so dass die relative Restfeuchte bei Verwendung der erfindungsgemäßen Trocknungsvorrichtung auf 1 % bis auf etwa 5 % reduziert werden kann.

Das in den Figuren der Zeichnung dargestellte und im Zusammenhang mit diesen beschriebene Ausführungsbeispiel der Erfindung dient lediglich der Erläuterung der Erfindung und ist für diese nicht beschränkend, insbesondere sind auch Ausführungen der erfindungsgemäßen Trocknungsvorrichtung Gegenstand der Erfindung, bei denen die Leitbleche fest eingebaut und nicht verstellbar sind.

### Bezugszeichenliste:

- 1: Trocknungsvorrichtung
- 2: Mittel zur Einstellung des Anstellwinkels
- 3: Warmluftstrom
- 4: Leitblech
- 5a: erste Drehachse für Leitblech (4)
- 5b: zweite Drehachse für Leitblech (4)
- 6: Strömungs- bzw. Leitkanal
- 7: Kunststoffteil/Kunststoffteile/Folienschnipsel
- 8: Luftstrom, in dem sich die Kunststoffteile (7) bewegen
- 9: Tiefe Strömungs- bzw. Leitkanal (6)
- 10: Behandlungsraum
- 11: Siebtrommel
- 12: Einlassöffnung
- 13: Auslassöffnung
- 14: Trommel
- 15: Anstellwinkel
- 16: Rotor
- 17: Schaufel
- 18: Drehung des Rotors

## Patentansprüche

1. Vorrichtung zur Trocknung einer Vielzahl von unterschiedlichen Kunststoffteilen (7), insbesondere kleinstückigem Material, wie zerkleinerte Kunststoffabfälle, umfassend
eine Trommel (14) mit einer Einlassöffnung (12) zum Einlassen von feuchten Kunststoffteilen (7) in die Trommel (14) und einer Auslassöffnung (13) zum Auslassen von entfeuchteten Kunststoffteilen (7) aus der Trommel (14), Mittel zum Transport der Kunststoffteile, wobei die Kunststoffteile (7) von der Einlassöffnung (12) durch die Trommel (14) hindurch zu der Auslassöffnung (13) transportierbar sind, und
Mittel zum Entfeuchten der Kunststoffteile, wobei die Kunststoffteile (7) innerhalb der Trommel (14) entfeuchtbar sind, vorzugsweise mit einer Luftströmung (3), **dadurch gekennzeichnet,**
**dass** an der Innenwandung der Trommel (14) mehrere Leitbleche (4) im Wesentlichen übereinander angeordnet sind, welche gegenüber der Innenwandung der Trommel (14) einen Anstellwinkel (15) aufweisen und jeweils abschnittsweise an der Innenwandung der Trommel (14) einen Strömungs- bzw. Leitkanal (6) für die Kunststoffteile (7) ausbilden, so dass die Kunststoffteile (7) von den Mitteln zum Transport der Kunststoffteile entlang des von den Leitblechen (4) ausgebildeten Strömungs- bzw. Leitkanals (6) durch die Trommel (14) hindurch transportiert werden.

2. Vorrichtung nach Anspruch 1, **dadurch gekennzeichnet, dass** ein Leitblech (4) wenigstens ein Viertel des Umfangs der Innenwandung der Trommel (14), bevorzugt etwa die Hälfte des Umfangs der Innenwandung der Trommel (14) umfasst.

3. Vorrichtung nach Anspruch 1 oder Anspruch 2, **gekennzeichnet durch** Mittel zur Einstellung des Anstellwinkels (2) eines Leitblechs (4), mittels derer die Neigung der Leitbleche (4) gegenüber der Innenwandung der Trommel (14) verstellbar und insbesondere eine Steigung eines Leitblechs (4) gegenüber der Innenwandung der Trommel (14) einstellbar ist.

4. Vorrichtung nach Anspruch 3, **dadurch gekennzeichnet, dass** die Mittel zur Einstellung des Anstellwinkels (2) eines Leitblechs (4) arretierbar sind, so dass der Neigungswinkel des wenigstens einen Leitblechs (4) fest einstellbar ist.

5. Vorrichtung nach einem der Ansprüche 1 bis 4, **dadurch gekennzeichnet, dass** die Leitbleche (4) in gleichmäßigen Abständen an der Innenwandung der Trommel (14) angeordnet sind und sich derart vorzugsweise über die gesamte Länge der Trommel (14) erstrecken.

6. Vorrichtung nach einem der Ansprüche 1 bis 5 , **dadurch gekennzeichnet, dass** die von den Leitblechen (4) ausgebildeten Strömungs- bzw. Leitkanäle im Wesentlichen überlappend ausgebildet sind, so dass die Kunststoffteile von den Mitteln zum Transport von einem Strömungs- bzw. Leitkanal (6) in einen benachbarten Strömungs- bzw. Leitkanal (6) transportiert werden.

7. Vorrichtung nach einem der Ansprüche 3 bis 6, **dadurch gekennzeichnet, dass** jeweils die Neigung der Leitbleche (4) über die Mittel zur Einstellung des Anstellwinkels (2) eines Leitblechs (4) simultan einstellbar ist.

8. Vorrichtung nach einem der Ansprüche 3 bis 7, **dadurch gekennzeichnet, dass** die Mittel zur Einstellung des Anstellwinkels (2) eines Leitblechs (4) manuell und/oder maschinell einstellbar sind.

9. Vorrichtung nach einem der Ansprüche 1 bis 8, **dadurch gekennzeichnet, dass** von der Innenwandung der Trommel (14) beabstandet eine Siebtrommel (11) angeordnet ist, wobei zwischen der Trommel (14) und der Siebtrommel (11) ein Sammelraum für Abscheidungen, insbesondere Wasser, ausgebildet ist.

10. Vorrichtung nach einem der Ansprüche 1 bis 9, **dadurch gekennzeichnet, dass** ein mit wenigstens einer Schaufel (17) versehener Rotor (16) in der Trommel (14) angeordnet ist, mittels welchem die Kunststoffteile (7) zur Entfeuchtung und/oder zum Transport von der Einlassöffnung (12) zu der Auslassöffnung (13) der Trommel (14) in der Trommel (14) umwälzbar sind.

11. Vorrichtung nach einem der Ansprüche 1 bis 10, **dadurch gekennzeichnet, dass** der Anstellwinkel (15) wenigstens eines Leitblechs (4) zwischen 0° und 45°, bevorzugt zwischen 0,5° und 30°, und besonders bevorzugt zwischen 1° und 20° beträgt.

12. Vorrichtung nach einem der Ansprüche 1 bis 11, **dadurch gekennzeichnet, dass** die Umfangsgeschwindigkeit des Rotors (16) zwischen 20 m/s und 160 m/s, bevorzugt zwischen 20 m/s und 120 m/s, besonders bevorzugt zwischen 20 m/s und 100 m/s beträgt.

## Claims

1. A device for drying a plurality of different plastic parts (7), in particular small sized material, such as crushed plastic waste, comprising a drum (14) with an inlet opening (12) for introducing humid plastic parts (7) into the drum (14), and an outlet opening (13) for discharging dehumidified plastic parts (7) from the drum (14),
means for transportation of the plastic parts, with the plastic parts (7) being transportable from the inlet opening (12) through the drum (14) to the outlet opening (13), and
means for dehumidifying the plastic parts, with the plastic parts (7) being dehumidifiable inside of the drum (14), preferably by an air flow (3), **characterised in**
**that** on the inner wall of the drum (14) several baffle plates (4) are substantially arranged one above the other, which have an angle of attack (15) with respect to the inner wall of the drum (14), and each form sectionwise a flow and/or guiding channel (6) for the plastic parts (7) on the inner wall of the drum (14) so that the plastic parts (7) are transported by the means for transportation of the plastic parts through the drum (14) alongside the flow and/or guiding channel (6) formed by the baffle plates (4)

2. The device according to claim 1, **characterised in that** a baffle plate (4) comprises at least a quarter of the circumference of the inner wall of the drum (14), preferably approximately half of the circumference of the inner wall of the drum (14).

3. The device according to claim 1 or 2, **characterised by** means for adjustment of the angle of attack (2) of a baffle plate (4) by means of which the inclination of the baffle plates (4) with respect to the inner wall of the drum (14) is adjustable, and in particular an ascending slope of a baffle plate (4) with respect to the inner wall of the drum (14) is adjustable.

4. The device according to claim 3, **characterised in that** the means for adjustment of the angle of attack (2) of a baffle plate (4) are lockable so that the angle of inclination of the at least one baffle plate (4) can be firmly adjusted.

5. The device according to any one of claims 1 to 4, **characterised in that** the baffle plates (4) are arranged at equal distance on the inner wall of the drum (14), and in such a manner preferably extend over the entire length of the drum (14).

6. The device according to any one of claims 1 to 5, **characterised in that** the flow and/or guiding channels formed by the baffle plates (4) are substantially formed in an overlapping manner so that the plastic parts are transported by the means for transportation from one flow and/or guiding channel (6) into an adjacent flow and/or guiding channel (6).

7. The device according to any one of claim 3 to 6, **characterised in that** the inclination of the baffle plates (4) is adjustable simultaneously via the means for adjustment of the angle of attack (2) of a baffle plate (4).

8. The device according to any one of claims 3 to 7, **characterised in that** the means for adjustment of the angle of attack (2) of a baffle plate (4) are manually and/or mechanically adjustable.

9. The device according to any one of claims 1 to 8, **characterised in that** a screen drum (11) is located spaced apart from the inner wall of the drum (14), with a collecting space for depositions, in particular water, being formed between the drum (14) and screen drum (11).

10. The device according to any one of claims 1 to 9, **characterised in that** a rotor (16) provided with at least one blade (17) is located in the drum (14) by means of which the plastic parts (7) for dehumidification and/or for transportation can be circulated inside the drum (14) from the inlet opening (12) to the outlet opening (13) of the drum (14).

11. The device according to any one of claims 1 to 10, **characterised in that** the angle of attack (15) of at least one baffle plate (4) is between 0° and 45°, preferably between 0.5° and 30°, and particularly preferably between 1° and 20°.

12. The device according to any one of clams 1 to 11, **characterised in that** the circumferential speed of the rotor (16) is between 20 m/s and 160 m/s, preferably between 20 m/s and 120 m/s, particularly preferably between 20 m/s and 100 m/s.

## Revendications

1. Dispositif de séchage d'une pluralité de pièces plastiques différentes (7), surtout des matériaux finement concassés comme des déchets plastiques concassés, comportant
un tambour (14) avec une ouverture d'entrée (12) pour introduire des pièces plastiques (7) humides dans le tambour (14), et une ouverture de sortie (13) pour évacuer des pièces plastiques (7) déshumidifiées du tambour (14),
des moyens pour le transport des pièces plastiques, les pièces plastiques (7) étant transportables de l'ouverture d'entrée (12) à travers le tambour (14) à l'ouverture de sortie (13), et
des moyens pour déshumidifier les pièces plastiques, les pièces plastiques (7) étant déhumidifiables dans le tambour (14), de préférence par un débit d'air (3), **caractérisé en ce**
**qu**'à la paroi interne du tambour (14) plusieurs déflecteurs (4) sont sensiblement superposés comportant un angle d'attaque (15) par rapport à la paroi interne du tambour (14) et formant par passages sur la paroi interne du tambour (14) un canal d'écoulement et/ou de guidage (6) pour les pièces plastiques (7) de sorte que les pièces plastiques (7) sont transportées à travers le tambour (14) par les moyens de transport des pièces plastiques le long du canal d'écoulement et/ou de guidage (6) formé par les déflecteurs (4).

2. Dispositif selon la revendication 1, **caractérisé en ce qu'**un déflecteur (4) comprend au moins un quart de la circonférence de la paroi interne du tambour (14), de préférence environ la moitié de la circonférence de la paroi interne du tambour (14).

3. Dispositif selon l'une des revendications 1 ou 2, **caractérisé par** des moyens pour le réglage de l'angle d'attaque (2) d'un déflecteur (4) par lesquels l'inclinaison des déflecteurs (4) par rapport à la paroi interne du tambour (14) est ajustable, et surtout une pente d'un déflecteur (4) est ajustable par rapport à la paroi interne du tambour (14).

4. Dispositif selon la revendication 3, **caractérisé en ce que** les moyens pour le réglage de l'angle d'attaque (2) d'un déflecteur (4) sont blocables de sorte que l'angle d'inclinaison d'au moins un déflecteur (4) est réglable de manière fixe.

5. Dispositif selon l'une des revendications 1 à 4, **caractérisé en ce que** les déflecteurs (4) sont disposés uniformément répartis à la paroi interne du tambour (14) et s'étendent de cette manière de préférence sur toute la longueur du tambour (14).

6. Dispositif selon l'une des revendications 1 à 5, **caractérisé en ce que** les canaux d'écoulement et/ou de guidage formés par les déflecteurs (4) sont formés sensiblement à chevauchements de sorte que les pièces plastiques sont transportés par les moyens pour le transport d'un canal d'écoulement et/ou de guidage (6) dans un canal d'écoulement et/ou de guidage (6) adjacent.

7. Dispositif selon l'une des revendications 3 à 6, **caractérisé en ce que** l'inclinaison des déflecteurs (4) est réglables simultanément par les moyens pour le réglage de l'angle d'attaque (2) d'un déflecteur (4).

8. Dispositif selon l'une des revendications 3 à 7, **caractérisé en ce que** les moyens pour le réglage de l'angle d'attaque (2) d'un déflecteur (4) sont réglables manuellement ou de manière mécanique.

9. Dispositif selon l'une des revendications 1 à 8, **caractérisé en ce qu'**un tambour tamiseur (11) est disposé espacé de la paroi interne du tambour (14), un espace collecteur pour des dépositions, surtout de l'eau, étant formé entre le tambour (14) et le tambour tamiseur (11).

10. Dispositif selon l'une des revendications 1 à 9, **caractérisé en ce qu'**un rotor ayant au moins une pale (17) est disposé dans le tambour (14), avec lequel les pièces plastiques (7) pour la déshumidification et/ou pour le transport peuvent être mises en circulation de l'ouverture d'entrée (12) à l'ouverture de sortie (13) du tambour (14).

11. Dispositif selon l'une des revendications 1 à 10, **caractérisé en ce que** l'angle d'attaque (15) d'au moins un déflecteur (4) est entre 0° et 45°, de préférence entre 0,5° et 30°, et particulièrement préféré entre 1 et 20°.

12. Dispositif selon l'une des revendications 1 à 11, **caractérisé en ce que** la vitesse circonférentielle du rotor (16) est entre 20 m/s et 160 m/s, de préférence entre 20 m/s et 120 m/s, particulièrement préféré entre 20 m/s et 100 m/s.
